# DEMANDE DE BREVET EUROPEEN

(11) **EP 2 505 338 A1**
(43) Date de publication de la demande: **03.10.2012**
(21) Numéro de dépôt: 12305382.9
(22) Date de dépôt: 30.03.2012
(51) Int. Cl.: B29C 65/16, B29K 105/32, B65D 8/22

(54) **Dispositif de fixation étanche par soudure laser de pièces plastiques transparentes ou translucides.**

(30) Priorité: 31.03.2011 FR 1152677
(71) Demandeur: Société Alsacienne de Fabrication, 68220 Hesingue (FR)
(72) Inventeur: Wicky, Jean-Jacques, 68730 BLOTZHEIM (FR); Hengy, Gilles, 68560 HIRSINGUE (FR)
(74) Mandataire: Littolff, Denis

(57) **Abrégé**

Dispositif de fixation étanche par soudure laser de deux pièces (1, 2) en matériau plastique transparentes ou translucides assemblées en vue de former un récipient pouvant contenir des produits liquides, crémeux ou pâteux, lesdites pièces (1, 2) présentant des surfaces de contact (3, 4) définissant une jointure, et comportant :
- un support de positionnement des pièces (1, 2);
- un laser (5) ;
- des moyens de déplacement relatif des pièces (1, 2) assemblées et du faisceau (6) laser le long d'au moins une portion des surfaces de contact (3, 4) ;

caractérisé en ce qu'il comporte au surplus :
- des moyens d'immobilisation desdites pièces (1, 2) assemblées sur leur support et de contrôle de la mise en pression de leurs surfaces de contact selon la direction d'assemblage (D) ; et
- des moyens de contrôle de l'activation et de l'intensité énergétique du faisceau (6) laser selon sa position relativement aux pièces assemblées (1, 2).

## Description

La présente invention a trait à un dispositif de fixation étanche de pièces plastiques transparentes ou translucides par soudure laser de la jointure définie par les surfaces de contact des deux pièces. Ce dispositif permet la fabrication de récipients aptes à contenir des produits liquides, crémeux, pâteux, etc.

Dans l'hypothèse de l'invention, ce genre de récipients transparents, prévus pour être fermés par exemple par des capsules/coiffes respectivement par vissage ou clipsage, est destiné au domaine de la cosmétique de luxe. L'aspect esthétique du récipient étant tout à fait primordial dans ce secteur, il est essentiel que la soudure soit invisible ou en tout état de cause pratiquement invisible, du fait de la transparence des pièces.

L'approche esthétique irréprochable du récipient ne doit cependant pas se faire au détriment d'autres caractéristiques, et en particulier de la tenue mécanique aux chocs ou de la transparence du plastique sélectionné.

L'art antérieur enseigne l'assemblage de deux pièces plastiques composant un récipient selon de nombreuses méthodes incluant le collage, le soudage par solvant, la soudure par friction, le chauffage par induction, ou encore le soudage par ultrason, comme c'est par exemple décrit dans les documents US 6 315 140 et US 045 280.

Les récipients assemblés par collage présentent l'inconvénient de nécessiter d'importantes épaisseurs de matière plastique pour augmenter la surface de collage et donc fortifier l'assemblage.

Ceux assemblés par des techniques de soudure standard conservent quant à eux des bourrelets ou des bavures, visibles de l'extérieur du récipient, du fait de la forte quantité d'énergie nécessaire à la fusion des matières, et/ou de l'apport de matière lors de la soudure.

La soudure par friction est difficile de mise en oeuvre, puisqu'elle nécessite la mise en oeuvre de déplacements relatifs, par exemple des rotations, d'une pièce par rapport à l'autre. Pour accélérer le phénomène de friction, un amincissement de l'épaisseur du récipient est dès lors généralement pratiqué au niveau des surfaces de contact, compliquant le moulage plastique préalable des deux pièces.

Quelle que soit la solution technique retenue, le soudage des thermoplastiques repose toujours sur les mêmes principes. Les matériaux sont chauffés au-dessus de la température de ramollissement (dépendant de la nature du matériau). Celle-ci atteinte, les pièces sont mises en contact pour permettre l'interpénétration des chaînes macromoléculaires. En refroidissant, les molécules perdent leur mobilité et restent enchevêtrées d'une pièce à l'autre, créant une liaison mécanique solide.

Dans tous les cas mentionnés, l'aspect visuel final des pièces souffre d'imperfections résultant des techniques elles-mêmes ou des difficultés à les mettre en oeuvre.

Pour toutes ces raisons, l'utilisation de lasers pour réaliser la soudure a été envisagée et expérimentée. Les techniques de soudage des thermoplastiques basées sur des technologies laser offrent en effet de meilleures perspectives pouvant en particulier permettre d'éviter les bourrelets et bavures inesthétiques.

Il existe de nombreux types de lasers, fonctionnant de manière très variable et produisant des faisceaux de lumière cohérente présentant des caractéristiques physiques parfois fort différentes.

Les applications de soudage par laser se basent en pratique sur une réponse optique et thermique des matériaux thermoplastiques au rayonnement. Par exemple, les lasers à diode ou Nd-YAG, émettant une lumière avec une longueur d'onde dans l'infrarouge, et ils ne fonctionnent donc pas avec les matériaux thermoplastiques transparents puisque le faisceau laser passe à travers sans interaction. Il est donc en principe nécessaire d'ajouter des charges ou des colorants dans au moins l'une des pièces à assembler.

En superposant dans ce cas une pièce en matériau plastique transparent avec une pièce en matériau plastique absorbant (devenu opaque par injection de noir de carbone par exemple) et en irradiant l'ensemble, les conditions de soudage sont alors réunies, à savoir un apport énergétique contrôlé et localisé précisément au niveau de la zone de contact entre les deux pièces. L'élévation de la température du matériau transparent est dans ce cas assurée par conduction thermique à partir du matériau absorbant.

Outre le fait que ce type de laser ne puisse pas souder deux pièces transparentes, il présente un autre inconvénient majeur : la soudure n'est pas homogène sur l'ensemble de la jointure entre les deux pièces, mais localisée sur la surface de contact touchée par le faisceau laser en premier lieu. Cette technique est donc réservée à l'assemblage de pièces de faible épaisseur.

Dans le cadre de l'invention, la sélection d'un laser capable de mettre en oeuvre des soudures adaptées aux produits visés, dans les conditions de qualité recherchées, est une première étape qui ouvre ensuite la question des modalités de son utilisation pour l'obtention de tels produits.

Pour mémoire, le dispositif d'assemblage de l'invention doit permettre l'obtention d'un récipient plastique alliant esthétisme (transparence totale, épaisseur variable, invisibilité des soudures), bonne tenue mécanique (résistance aux chocs) et productivité (mise en oeuvre aisée, temps de cycle réduit lors de la fabrication).

La présente invention remplit ces objectifs et d'autres qui seront manifestes à la lecture de la suite du texte, en ce qu'elle permet notamment l'assemblage d'un récipient par des soudures aussi peu visibles que possible sans altérer l'état des parois du récipient, ce dernier gardant ses propriétés de transparence après assemblage et étant apte à résister à un test de chute normatif.

Le dispositif de fixation selon l'invention comporte :
- un support de positionnement des pièces ;
- un laser ;
- des moyens de déplacement relatif des pièces assemblées et du faisceau laser le long d'au moins une portion des surfaces de contact.

Ce dispositif de l'invention se caractérise à titre principal en ce qu'il comporte :
- des moyens d'immobilisation desdites pièces assemblées sur leur support et de contrôle de la mise en pression de leurs surfaces de contact selon la direction d'assemblage ;
- des moyens de contrôle de l'activation et de l'intensité énergétique du faisceau laser selon sa position relativement aux pièces assemblées.

En pratique, la mise en place de ce dispositif s'écarte de certaines contraintes liées à l'usage d'autres technologies. En particulier, lors de la soudure, les deux pièces à fixer sont immobiles l'une par rapport à l'autre, contrairement aux soudures par friction. De plus, l'absence de contact entre la source énergétique, à savoir le laser, et les pièces plastiques autorise un positionnement relatif ne nécessitant pas obligatoirement une haute précision, dans des conditions qui seront précisées dans la suite.

De préférence, de manière à simplifier les opérations, il est prévu que le matériau plastique des deux pièces soit identique.

Le dispositif de l'invention permet néanmoins d'assembler un large panel de matériaux thermoplastiques. A titre d'exemple, citons les polypropylènes, les polyéthylènes, les polyamides, les résines acétals, les polyesters, les polycarbonates, les résines à base de styrène et les résines copolyesters.

De préférence encore, le laser utilisé dans l'invention est un laser à fibre optique. Des tests ont montré que l'usage d'un tel laser, fonctionnant par exemple avec les paramètres de réglage mentionnés ci-après, permet d'obtenir des bons résultats. Le laser choisi présente ainsi une longueur d'onde de l'ordre de 1,940 µm, pour une puissance comprise entre 40 W et 100 W adaptée à des épaisseurs de paroi de l'ordre d'un à quelques mm, et il peut être couplé à une lentille de collimation pour l'obtention d'un spot de diamètre compris entre 1 mm et 1,5 mm.

Ces longueurs d'onde relativement élevées par rapport aux lasers infrarouges utilisés classiquement dans des opérations de soudure permettent à des matériaux translucides de devenir absorbants dans le volume : en d'autres termes, la soudure n'est plus seulement localisée sur le bord extérieur de la jointure touchée en premier lieu par le faisceau laser, mais peut être effective sur toute la profondeur de la jointure.

L'avantage principal apporté par cette solution est la possibilité de fixer par soudure laser deux pièces identiques tant au niveau de leur composition plastique qu'au niveau de leur couleur, y compris les matériaux optiquement translucides dans le domaine du visible.

Dans le dispositif de l'invention, le laser est fixe et les pièces à souder se déplacent, ou inversement le laser se déplace tandis que les pièces sont fixes. Selon une possibilité, les moyens de déplacement des pièces à assembler peuvent être constitués d'une machine à commande numérique 3 axes comportant un plateau constituant le support et muni de moyens de fixation pour lesdites pièces. Pour la réalisation d'une soudure robuste, il est impératif de maintenir fermement les deux pièces en pression sur toutes leurs surfaces de contact, ce qui est réalisé sur ledit support, via les moyens de fixation précités.

La machine à commande numérique gère la vitesse d'avancement des pièces assemblées par rapport au faisceau laser. Le réglage de cette vitesse est primordial pour obtenir des cordons de soudure propres et résistants. Cette vitesse détermine le temps d'irradiation de chaque point des jointures des pièces au faisceau laser.

Après essais, il s'avère que pour garantir une résistance linéaire suffisante des cordons de soudure, la vitesse de soudage ne doit pas excéder une valeur critique. Au-delà, la tenue mécanique est limitée et insuffisante par manque de pénétration du rayonnement laser. Ainsi, pour optimiser la productivité en diminuant les temps de cycle de fabrication des récipients tout en garantissant une bonne tenue mécanique, il est préférable d'effectuer des cordons de soudure discontinus de longueur limitée mais plus robustes, plutôt que de souder sur des longueurs plus importantes, aboutissant à créer des cordons de soudure plus fragiles.

Selon l'invention, les moyens de contrôle du faisceau laser consistent en un automate programmable. Ce dernier gère les paramètres de réglages principaux qui sont :
- l'activation/désactivation du laser ;
- l'intensité du laser ;
- les courbes de puissance du laser ;
- le diamètre du faisceau ;
- la durée du tir laser.

Ces paramètres sont à régler spécifiquement en fonction des pièces à assembler et en particulier de leur forme et du matériau utilisé. De manière générale, il est important de conserver un diamètre de faisceau assez grand pour compenser les défauts de positionnement du laser par rapport aux pièces.

L'invention a par ailleurs trait à un procédé de fixation étanche par soudure laser de deux pièces en matériau plastique transparentes ou translucides assemblées en vue de former un récipient pouvant contenir des produits liquides, crémeux ou pâteux au moyen du dispositif précédemment décrit. Ce procédé contient les étapes suivantes :
- positionnement et fixation des pièces sur leur support ;
- réglage de la pression de contact entre elles ;
- commande du positionnement et du déplacement relatif du support et du faisceau laser selon un schéma de vitesses et un trajet prédéterminés en fonction de la géométrie de la jointure entre les deux pièces ;
- commande de l'activation, de la désactivation et de l'intensité du faisceau laser selon des programmes prédéterminés fonctions de la géométrie de la jointure.

Concrètement, lorsque les surfaces de contact en regard à souder comportent une portion d'allure parallèle à la direction du faisceau, la fixation peut consister en une soudure « en bord à bord ». Lorsque les surfaces de contact en regard à souder sont d'allure perpendiculaire à la direction du faisceau, les surfaces à souder étant situées à l'intérieur du volume de la matière constituant le récipient, la fixation consistera en une soudure « par transparence » puisque le faisceau laser doit réaliser la soudure en profondeur.

Dans l'hypothèse où la jointure comporte des surfaces en regard d'allure parallèle et perpendiculaire à la direction du faisceau, et que la soudure doive se faire selon deux plans, le positionnement du support est prévu pour que le faisceau balaye la jointure orientée sensiblement parallèlement à ladite direction ainsi qu'au moins une fraction de la portion de la jointure qui lui est perpendiculaire. En d'autres termes, le laser réalise à la fois une soudure en bord à bord et une soudure par transparence.

Par ailleurs, le positionnement des cordons de soudure sur la pièce, lorsqu'il y a discontinuité, n'est pas anodin, leurs longueur et positionnement obéissant à des contraintes de productivité (temps de soudure) et à des contraintes mécaniques (solidité de la fixation). De manière avantageuse, le faisceau laser est activé sur au moins deux segments finis prédéterminés de la jointure.

Si le récipient présente une symétrie par rapport à un axe parallèle à la direction d'assemblage, les segments finis sont de préférence disposés symétriquement par rapport audit axe.

Par exemple, dans le cas d'un récipient de forme prismatique, il est préférable de répartir les cordons de soudure sur deux arêtes opposées symétriquement du récipient, et non pas sur deux arêtes adjacentes.

Mieux encore, la réalisation de quatre cordons de soudure de par exemple 20mm sur les quatre arêtes du récipient offrira une meilleure résistance mécanique que deux cordons de 40mm sur deux arêtes opposées.

De manière générale, les soudures de jointures angulaires sont plus délicates à effectuer que les soudures de jointures linéaires, notamment dans la perspective de préserver l'invisibilité des zones soudées, la vitesse relative du faisceau et de la jointure n'y étant en général pas uniforme.

Plus généralement, pour que la puissance nécessaire à la soudure soit la plus constante possible sur les segments à souder, l'intensité du faisceau laser est commandée en rampe progressive, voire dégressive, sur les segments finis. Cette adaptation de l'intensité du faisceau laser permet d'éviter des points chauds localisés en début ou en fin de soudure, qui restent visibles et présentent un aspect évidemment inesthétique incompatible avec les exigences d'aspect attachées au produit.

Il est bien évident que les soudures doivent assurer l'étanchéité du récipient en fonction de la viscosité du produit qu'il contient. Ainsi, un récipient contenant une crème ne nécessitera pas le même degré d'étanchéité qu'un récipient contenant un liquide.

D'autres avantages et caractéristiques de l'invention apparaissent à la lecture de la description suivante, faite à titre d'exemple non limitatif et se référant au dessin annexé pour lequel :
- la figure 1 est une vue en coupe de deux pièces en position d'assemblage, représentant une soudure par transparence ;
- la figure 2 est une vue en coupe identique à la figure 1, représentant une soudure supplémentaire en bord à bord ;
- la figure 3 représente un exemple d'application d'une soudure en bord à bord sur un col de flacon ;
- la figure 4 représente six configurations possibles de cordons de soudure appliqués à un récipient d'allure cubique.

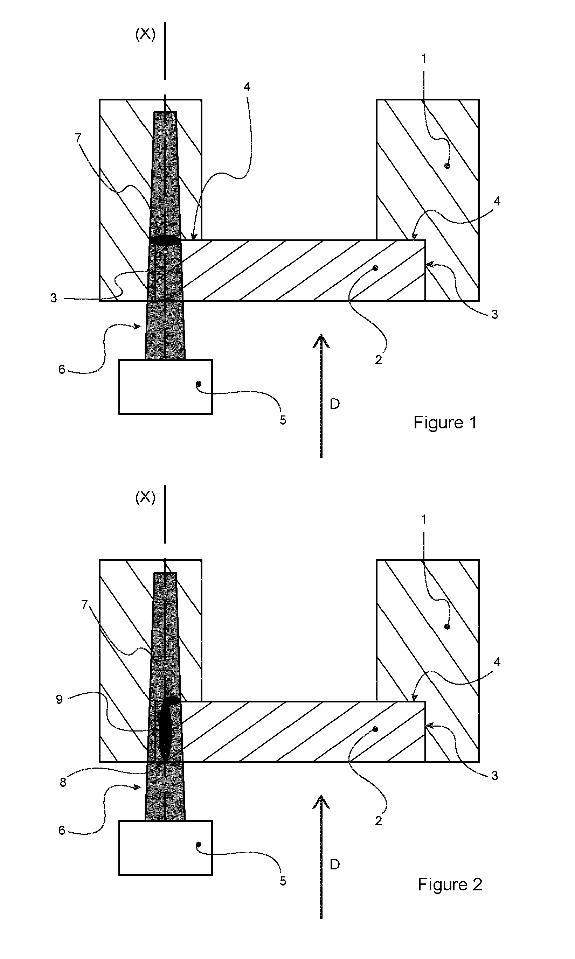

Les figures 1 et 2 représentent deux pièces (1, 2) en position d'assemblage. Dans cet exemple, la pièce (1) correspond au corps d'un récipient, tandis que la pièce (2) correspond au fond du récipient.

Ces deux pièces (1, 2) présentent des surfaces de contact (3) d'allure parallèle à la direction d'assemblage (D) des pièces, ainsi que des surfaces de contact (4) d'allure perpendiculaire à la direction d'assemblage (D) des pièces.

Dans la configuration présentée en figure 1, le laser (5) est situé au voisinage du fond (2) du récipient. Il émet un faisceau laser (6) dont la direction est sensiblement parallèle à la direction d'assemblage (D) des pièces.

Plus précisément, le laser (5) est positionné de manière à diriger son faisceau en direction des surfaces de contact à souder.

Sur la figure 1, l'axe (X) central du faisceau laser (6) est décalé par rapport à la jointure (3) d'allure parallèle au faisceau (6) de manière à ce qu'il traverse la matière constituant le fond (2) pour atteindre la jointure (4) d'allure perpendiculaire au faisceau (6), ledit faisceau (6) étant prévu pour provoquer la soudure (7) d'une portion de la jointure (4) comprise dans le diamètre du faisceau (6). Il s'agit en l'occurrence d'une soudure (7) par transparence.

Sur la figure 2, l'axe (X) central du faisceau (6) est sensiblement aligné avec la jointure (3) d'allure parallèle à la direction du faisceau (6). Après activation du laser, le faisceau (6), qui rencontre donc en premier lieu l'extrémité extérieure (8) de cette jointure (3), est calculé pour provoquer la soudure (9) de toute cette jointure rectiligne (3), ainsi que la soudure (7) d'une portion de la jointure (4) orientée perpendiculairement à l'axe (X) et comprise à l'intérieur du diamètre du faisceau (6). Dans ce cas, le résultat obtenu consiste en une soudure (9) bord à bord de la jointure (3) sur toute sa longueur/profondeur, ainsi qu'une soudure (7) par transparence d'une portion de la jointure (4).

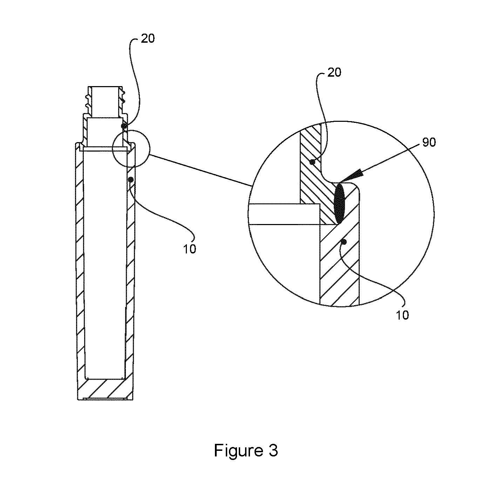

De la même manière, la figure 3 représente une soudure en bord à bord (90) entre le corps (10) et le col (20) d'un flacon. Cette technique de soudure est donc applicable à tout emplacement sur le flacon/récipient, et à tout type de flacon/récipient.

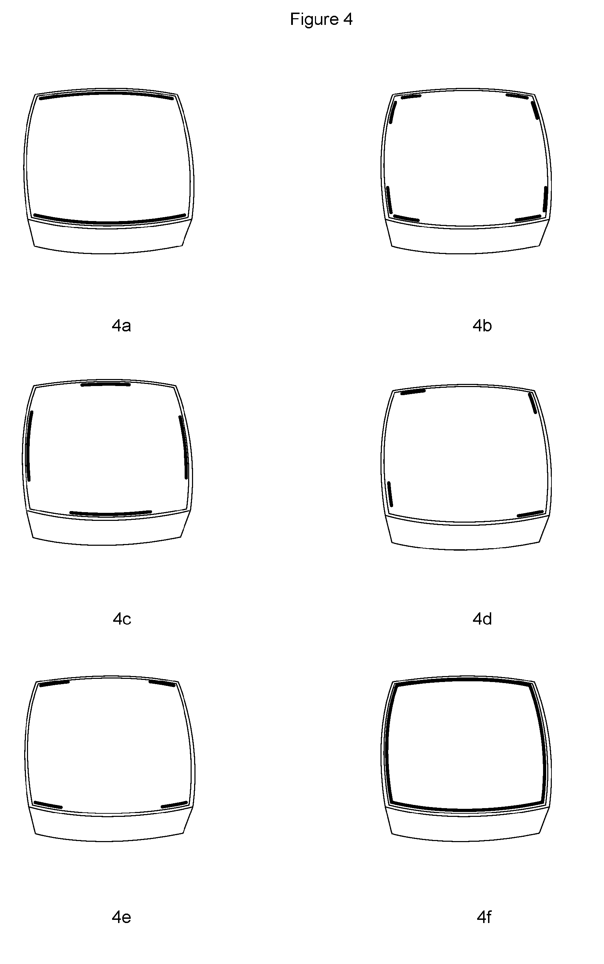

La figure 4 représente différentes solutions pour souder le fond (2) au corps (1) de manière à assembler un récipient de forme d'allure prismatique. Chaque solution présente des cordons de soudure de différentes longueurs, localisés à différents emplacements.

Toutes les solutions n'ont pas la même robustesse, certaines solutions pouvant à cet égard être considérées comme préférentielles.

Dans le cas 4a, l'assemblage est réalisé par deux cordons de soudure sur deux arêtes opposées. Les cordons s'étalent sur toute la longueur de l'arête.

Dans le cas 4b, les soudures sont localisées dans les coins du récipient, et forment ainsi quatre angles droits. Les coins proprement dits n'étant pas soudés, la gestion du faisceau et de sa vitesse s'effectue en deux phases de commande distinctes. Les cas 4d et 4e rejoignent le cas 4b car les soudures sont également localisées dans les coins du récipient, mais sur un unique tronçon rectiligne se terminant au voisinage du coin. Ces quatre tronçons se situent sur les quatre arêtes du récipient dans le cas 4d, et sur deux arêtes opposées du récipient dans le cas 4e.

Le cas 4c présente quant à lui quatre cordons de soudure de longueur moyenne répartis sur la partie centrale parallèlement aux quatre arêtes du récipient. Plus précisément, la longueur d'un cordon correspond environ à la moitié de la longueur d'une arête du récipient.

De manière générale, à longueur de soudure égale, un cordon de soudure réparti sur les quatre arêtes est plus résistant qu'un cordon réparti sur deux arêtes. D'autre part, le soudage dans les angles n'est pas conseillé car le raccordement entre les deux tronçons perpendiculaires est délicat et conduit facilement à des imperfections optiques.

Le cas 4c est par exemple un bon compromis pour la réalisation d'une soudure robuste.

Enfin, le cas 4f illustre une soudure sur tout le pourtour du récipient. Cette solution est bien plus robuste que la solution 4c, mais elle est également la plus chère car le temps de cycle est deux fois supérieur à celui des cas précédents, pour une même vitesse de soudage qu'il n'est pas possible d'accélérer, sauf à obérer la qualité de la liaison mécanique.

L'invention précédente a été décrite au moyen d'exemples préférentiels, qui ne peuvent toutefois être considérés comme limitatifs. Les variantes et les modifications de forme qui entrent dans le contenu englobé par les revendications annexées font partie de l'invention.

## Revendications

1. Dispositif de fixation étanche par soudure laser de deux pièces (1, 2) en matériau plastique transparentes ou translucides assemblées en vue de former un récipient pouvant contenir des produits liquides, crémeux ou pâteux, lesdites pièces (1, 2) présentant des surfaces de contact (3, 4) définissant une jointure, et comportant :
- un support de positionnement des pièces (1,2) ;
- un laser (5) ;
- des moyens de déplacement relatif des pièces (1, 2) assemblées et du faisceau (6) laser le long d'au moins une portion des surfaces de contact (3, 4) ;
**caractérisé en ce qu'**il comporte au surplus :
- des moyens d'immobilisation desdites pièces (1, 2) assemblées sur leur support et de contrôle de la mise en pression de leurs surfaces de contact selon la direction d'assemblage (D) ; et
- des moyens de contrôle de l'activation et de l'intensité énergétique du faisceau (6) laser selon sa position relativement aux pièces assemblées (1, 2).

2. Dispositif de fixation selon la revendication précédente, **caractérisé en ce que** le matériau plastique des deux pièces (1, 2) est identique.

3. Dispositif de fixation selon la revendication précédente, **caractérisé en ce que** le matériau plastique est choisi parmi les polypropylènes, les polyéthylènes, les polyamides, les résines acétals, les polyesters, les polycarbonates, les résines à base de styrène et les résines copolyesters.

4. Dispositif de fixation selon l'une des revendications précédentes, **caractérisé en ce que** le laser (5) est un laser à fibre optique.

5. Dispositif de fixation selon l'une des revendications précédentes, **caractérisé en ce que** le laser (5) présente une longueur d'onde de l'ordre de 1,940 µm, une puissance comprise entre 40 W et 100 W, et est couplé à une lentille de collimation pour l'obtention d'un spot de diamètre compris entre 1 mm et 1,5 mm.

6. Dispositif de fixation selon l'une des revendications précédentes, **caractérisé en ce que** les moyens de déplacement des pièces (1, 2) sont constitués d'une machine à commande numérique 3 axes comportant un plateau constituant le support et muni de moyens de fixation pour les pièces (1, 2) à assembler.

7. Dispositif de fixation selon l'une des revendications précédentes, **caractérisé en ce que** les moyens de contrôle du faisceau (6) laser consistent en un automate programmable.

8. Procédé de fixation étanche par soudure laser de deux pièces (1, 2) en matériau plastique transparentes ou translucides assemblées en vue de former un récipient pouvant contenir des produits liquides, crémeux ou pâteux au moyen du dispositif décrit selon les revendications précédentes, **caractérisé en ce qu'**il comprend les étapes suivantes :
- positionnement et fixation des pièces (1, 2) sur leur support ;
- réglage de la pression de contact entre elles ;
- commande du positionnement et du déplacement relatif du support et du faisceau (6) laser selon un schéma de vitesses et un trajet prédéterminés en fonction de la géométrie de la jointure entre les deux pièces (1, 2) ;
- commande de l'activation, de la désactivation et de l'intensité du faisceau (6) laser selon des programmes prédéterminés fonctions de la géométrie de la jointure.

9. Procédé de fixation selon la revendication précédente, **caractérisé en ce que**, dans l'hypothèse où la jointure comporte des surfaces en regard d'allure parallèle (3) et perpendiculaire (4) à la direction du faisceau (6), le positionnement du support est prévu pour que le faisceau (6) balaye la jointure orientée sensiblement parallèlement à ladite direction ainsi qu'au moins une portion de la jointure qui lui est perpendiculaire.

10. Procédé de fixation selon l'une des revendications 8 et 9, **caractérisé en ce que** le faisceau (6) laser est activé sur au moins deux segments finis prédéterminés de la jointure.

11. Procédé de fixation selon la revendication précédente, **caractérisé en ce que**, si le récipient présente une symétrie par rapport à un axe parallèle à la direction d'assemblage (D), les segments finis sont disposés symétriquement par rapport audit axe.

12. Procédé de fixation selon l'une des revendications 10 et 11, **caractérisé en ce que** l'intensité du faisceau (6) laser est commandée en rampe progressive sur les segments finis.
